# EUROPÄISCHE PATENTSCHRIFT

(11) **EP 0 599 784 B1**
(45) Veröffentlichungstag und Bekanntmachung des Hinweises auf die Patenterteilung: **29.01.1997**
(21) Anmeldenummer: 93810790.1
(22) Anmeldetag: 15.11.1993
(51) Int. Cl.: G02B 6/38, H01R 13/453

(54) **Buchsenteil für eine Lichtwellenleiter-Steckverbindung**
Socket for a fibre optic connection terminal
Douille pour un terminal de connexion à fibre optique

(30) Priorität: 26.11.1992 CH 3621/92
(43) Veröffentlichungstag der Anmeldung: 01.06.1994
(73) Patentinhaber: DIAMOND S.A., CH-6616 Losone-Locarno (CH)
(72) Erfinder: Marazzi, Silvio, CH-6654 Cavigliano (CH); De Marchi, Silverio, CH-6646 Contra (CH)
(74) Vertreter: Wenger, René

(56) Entgegenhaltungen:
- RESEARCH DISCLOSURE, Nr. 275, März 1987, Havant GB, Seite 124 'Fiber optic connector with built-in shutter'
- PATENT ABSTRACTS OF JAPAN vol. 6, no. 245 (P-159)(1123) 3. Dezember 1982 & JP-A-57 142 607
- PATENT ABSTRACTS OF JAPAN vol. 5, no. 177 (P-89)(849) 13. November 1981 & JP-A-56 107 206
- PATENT ABSTRACTS OF JAPAN vol. 12, no. 368 (P-766) 4. Oktober 1988 & JP-A-63 118 707

## Beschreibung

Die Erfindung betrifft ein Buchsenteil für eine Lichtwellenleiter-Steckverbindung gemäss dem Oberbegriff von Anspruch 1. Derartige Buchsenteile werden vor allem als Adapter oder als Mittelteile für die Befestigung an einer Gehäusewand verwendet.

Der Zweck derartiger Buchsenteile besteht darin, die Buchsenöffnung vor Verunreinigungen oder vor mechanischen Einwirkungen zu schützen. Anderseits soll aber auch das Austreten von Licht aus dem Buchsenteil bei ausgezogenem Steckerstift verhindert werden. Handelt es sich bei diesem Licht beispielsweise um Laserlicht, so könnten Augenverletzungen auftreten, sobald der Lichtstrahl auf die ungeschützte Netzhaut fällt. Aber auch aus anderen Gründen technischer Art könnte das Austreten von Licht aus dem Buchsenteil unerwünscht sein.

In der JP-A-57/142 607 ist eine Anschlussbuchse für einen fotoelektrischen Wandler beschrieben, bei welcher die Eintrittsöffnung für die optische Faser von einem unter Federvorspannung stehenden Deckel verschlossen ist. Beim Einschieben der Faser wird der Deckel zur Seite geschoben. Bei einer in "Research Disclosure" Nr. 275, März 1987, S. 124 beschriebenen Steckverbindung ist die Buchsenöffnung mit einer flexiblen Lamelle abgedeckt, welche beim Einstecken des Steckerstifts in einen seitlichen Hohlraum gepresst wird.

Ein Problem bei den bekannten Buchsenteilen besteht darin, dass die Montage und Lagerung der Schutzklappen erhebliche Schwierigkeiten bereitet. Die Schutzklappe muss ihre Funktion nämlich auf kleinstem Raum erfüllen und sie hat notgedrungen nur sehr geringe Abmessungen von wenigen Millimetern. Dadurch wird bereits die Montage relativ aufwendig. Dazu kommt noch das Erfordernis, dass die Schutzklappe in der Regel mit einer separaten Feder vorgespannt werden muss. Nur so ist gewährleistet, dass die Schutzklappe bei ausgestecktem Steckerstift immer in der Schliessstellung verbleibt.

Es ist daher eine Aufgabe der Erfindung, ein Buchsenteil der eingangs genannten Art zu schaffen, bei dem die Schutzklappe bei einem Höchstmass an Betriebssicherheit auf einfachste Weise montiert und demontiert werden kann. Diese Aufgabe wird erfindungsgemäss mit einem Buchsenteil gelöst, das die Merkmale im Anspruch 1 aufweist. Da die Schutzklappe zwischen den beiden Buchsengehäusen gehalten und schwenkbar gelagert ist, kann sie besonders einfach montiert und demontiert werden. Es müssen dabei keine separaten Achsen oder dergleichen eingesetzt werden, wie dies beispielsweise bei der Buchse gemäss JP-A-57/142 607 erforderlich ist. Die Schutzklappe bleibt trotzdem unverlierbar mit dem Buchsenteil verbunden und sie ist bei Betriebsstörungen jederzeit leicht zugänglich oder austauschbar. Die Betriebssicherheit ist wesentlich erhöht, weil die Schutzklappe schwenkbar gelagert ist und weil sie unter Federvorspannung in der Schliessstellung gehalten ist. Dadurch schwenkt die Schutzklappe automatisch in die Schliessstellung zurück, sobald der Steckerstift aus der Buchse herausgezogen wird.

Dabei ist es besonders vorteilhaft, wenn die Schutzklappe in der Schliessstellung in einem Winkel schräg zur Mittelachse der Buchse gehalten ist und wenn sie in Richtung gegen die Buchsenöffnung in die Öffnungsstellung schwenkbar ist. Durch die Schräglage muss die Schutzklappe bis in die Öffnungsstellung nur eine relativ kleine Schwenkbewegung ausführen und der Einsteckwiderstand für den Stecker wird nur geringfügig erhöht.

Die Schutzklappe wird vorzugsweise mittels einer Blattfeder in die Schliessposition vorgespannt. Die Blattfeder lässt sich im Buchsenteil leicht unterbringen und die Federkraft reicht völlig aus, um die Schutzklappe vorzuspannen.

Die Schutzklappe kann seitliche Gelenknocken für die schwenkbare Lagerung in durch die beiden Buchsengehäuse gebildeten Lagerstellen aufweisen. Es wäre aber auch ohne weiteres denkbar, die Schutzklappe in seitlichen Führungsnuten oder dergleichen zu lagern. Die Schutzklappe kann ferner seitliche Anschlagnocken für die Lagebegrenzung in der Schliessstellung aufweisen. Damit kann eine kräftemässig besonders günstige Schräglage der Schutzklappe gewählt werden. Die Schutzklappe kann etwa rechteckig ausgebildet sein, weil dies ihre seitliche Führung und Lagerung wesentlich vereinfacht. Sie könnte aber ohne weiteres auch eine kreisrunde oder eine abgerundete Form aufweisen.

Besonders vorteilhaft hat das innere Buchsengehäuse wenigstens eine Öffnung in einer Gehäusewand, durch welche die Schutzklappe für die Montage oder Demontage schiebbar ist, wobei diese Öffnung mit dem äusseren Buchsengehäuse verschliessbar ist. Diese Öffnung erlaubt es, die Buchsenklappe auf direktem Wege an die richtige Stelle zu plazieren, ohne dass schwierige Manipulationen oder Hilfswerkzeuge erforderlich wären. Die Montage lässt sich dabei leicht automatisieren.

Das Buchsenteil kann eine Buchse aufweisen, in welche von beiden Seiten her ein Steckerstift einsteckbar ist, wobei vor jeder Buchsenöffnung eine Schutzklappe angeordnet ist. Dadurch lässt sich das erfindungsgemässe Buchsenteil auch vielseitig einsetzen, denn es spielt grundsätzlich keine Rolle, welcher der eingesteckten Stecker den lichtführenden Lichtwellenleiter trägt. Bei jeder beliebigen Kombination ist zuverlässig gewährleistet, dass die Buchsenöffnung bei ausgestecktem Steckerstift abgedeckt ist.

Bei einem doppelseitigen Buchsenteil werden die beiden Schutzklappen vorzugsweise durch eine gemeinsame Blattfeder in die Schliessposition vorgespannt, welche unter der Buchse im Buchsenteil angeordnet ist. Die Blattfeder kann dabei durch eine Buchsenhalterung in ihrer Lage fixiert werden, welche in das Buchsenteil einschiebbar ist, und zwar auf ähnliche Weise, wie die Schutzklappen selbst durch eine Öffnung am inneren Buchsengehäuse.

Weitere Vorteile und Einzelmerkmale ergeben sich aus der nachfolgenden Beschreibung eines Ausführungsbeispiels und aus den Zeichnungen. Es zeigen:
- Figur 1: eine in ihre Einzelteile zerlegte Steckverbindung mit einem erfindungsgemässen Buchsenteil,
- Figur 2: die Steckverbindung gemäss Figur 1 im zusammengebauten Zustand,
- Figur 3: einen Querschnitt durch die Ebene I-I gemäss Figur 2,
- Figur 4: einen Querschnitt durch die Ebene II-II gemäss Figur 2,
- Figur 5: eine perspektivische Darstellung des inneren Buchsengehäuses mit Blick auf die Unterseite, und
- Figur 6: eine perspektivische Darstellung einer Steckverbindung mit teilweise aufgeschnittenem Buchsenteil.

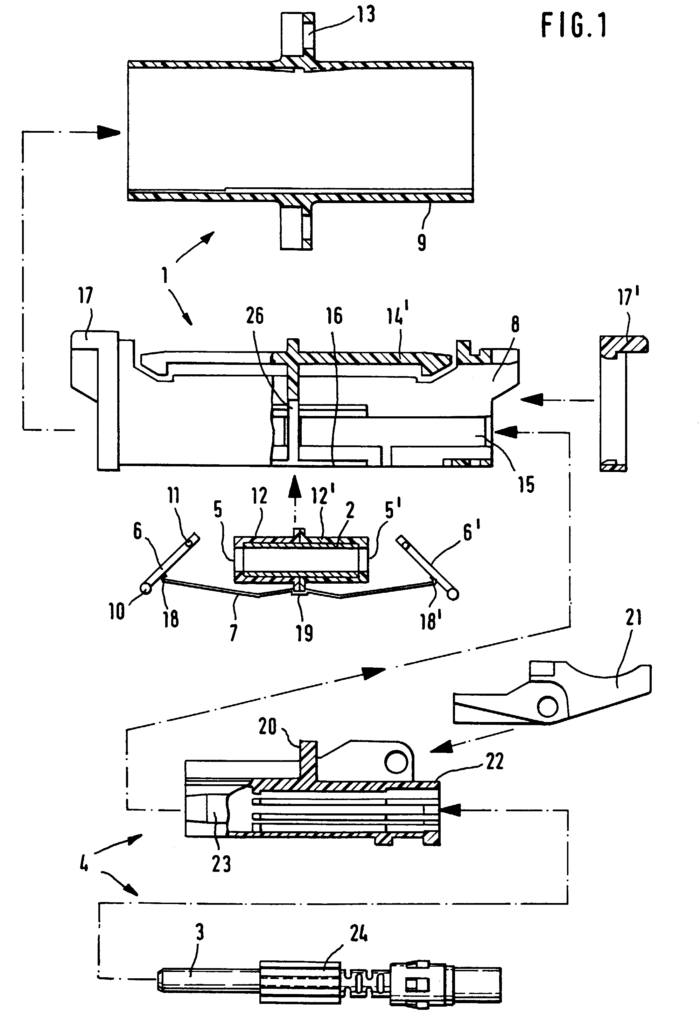

Figur 1 zeigt die Einzelteile einer typischen Steckverbindung mit einem Buchsenteil 1 und mit einem Stecker 4. Das Buchsenteil 1 ist dazu bestimmt, von beiden Seiten her einen gleichartigen Stecker 4 aufzunehmen, wobei jeder Steckerstift 3 in die eigentliche Buchse 2 eindringt und dort auf den gegenüberliegenden Steckerstift zentriert wird.

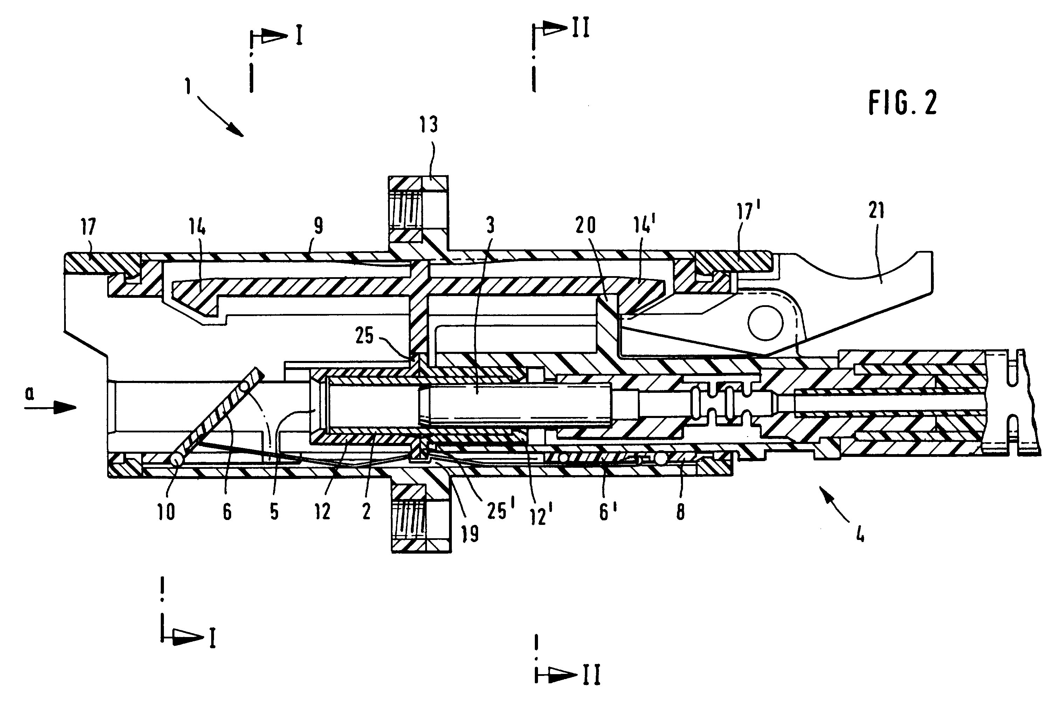

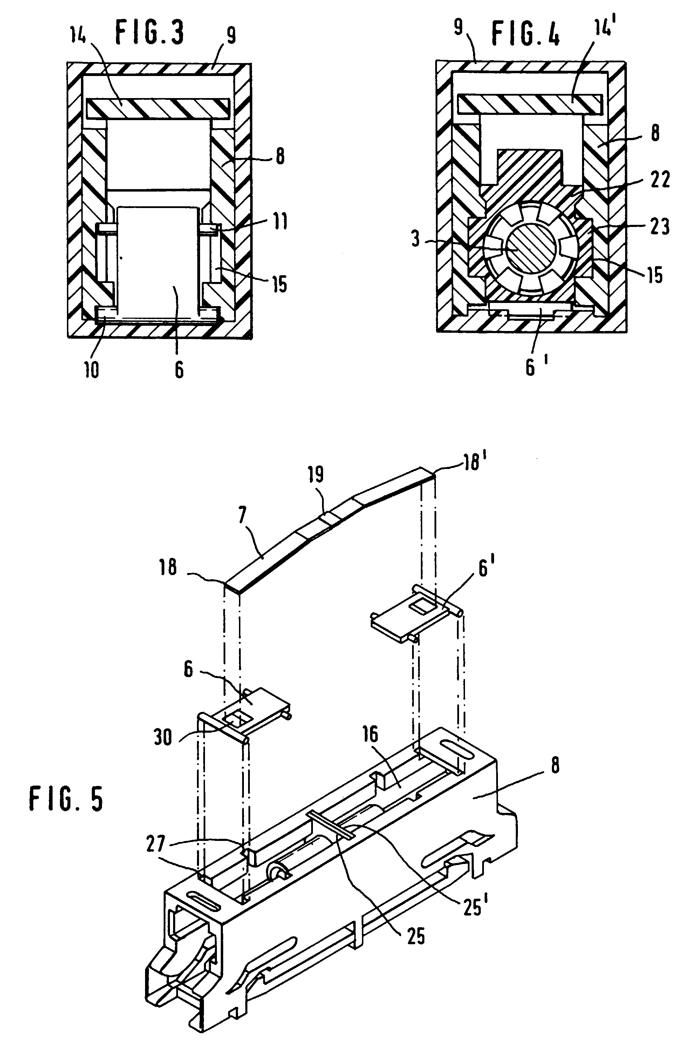

Das Buchsenteil 1 hat ein äusseres Buchsengehäuse 9 mit einem Flansch 13, an dem das Buchsenteil beispielsweise an einer Gehäusewand verschraubt werden kann. In das äussere Buchsengehäuse 9 kann das innere Buchsengehäuse 8 eingeschoben werden. Wie insbesondere aus den Figuren 3 und 4 hervorgeht, haben beide Buchsengehäuse einen etwa kastenförmigen, rechteckigen Querschnitt. Die Fixierung des inneren Buchsengehäuses im äusseren Buchsengehäuse erfolgt durch seitlich aufschnappbare Aufsteckrahmen 17 und 17', wie insbesondere auch aus Figur 2 ersichtlich ist.

Das innere Buchsengehäuse 8 hat auf seiner Oberseite federnde Sperrklinken 14, 14', welche dazu dienen, die Stecker in der eingesteckten Position zu arretieren. An den Seitenwänden des inneren Buchsengehäuses 8 sind Führungsnuten 15 angeordnet, welche dazu dienen, die Stecker lagerichtig aufzunehmen. Auf der Unterseite des inneren Buchsengehäuses 8 ist eine Öffnung 16 angeordnet, durch welche die Buchse 2 mit der dazugehörigen Buchsenhalterung 12, 12' eingeschoben werden kann.

Die Buchse ist in der Buchsenhalterung vorzugsweise schwimmend gelagert, wobei die beiden Teile der Buchsenhalterung einander zugewandte, flanschartige Randabschnitte 25, 25' aufweisen. Zur Aufnahme der beiden Randabschnitte sind am inneren Buchsengehäuse ebenfalls seitliche Führungsnuten 26 angeordnet. Unterhalb der Buchsenhalterung ist eine Blattfeder 7 angeordnet, deren Enden 18, 18' an den Schutzklappen 6, 6' angreifen. Der Mittelabschnitt 19 der Blattfeder ist als Klammer ausgebildet, in welche die beiden Randabschnitte 25, 25' der Buchsenhalterung eingreifen. Auf diese Weise wird die Lage der Blattfeder 7 im Buchsengehäuse fixiert.

Die Konfiguration der beiden Schutzklappen 6, 6' ist insbesondere aus Figur 3 ersichtlich. Jede Schutzklappe hat eine etwa rechteckige Form und sie ist mit seitlichen Gelenknocken 10 versehen, welche zwischen dem inneren und dem äusseren Buchsengehäuse festgehalten werden. Ausserdem hat jede Schutzklappe seitliche Anschlagnocken 11, welche seitlich in die Führungsnuten 15 eingreifen und welche die Schräglage in der Schliessstellung begrenzen. Diese Schräglage relativ zur optischen Achse bewirkt auch eine Ablenkung des austretenden Lichtstrahls und damit eine hohe Rückflussdämpfung. Die Führungsnuten sind dabei seitlich in Schwenkrichtung derart geöffnet, dass jede Schutzklappe eine Lage parallel zur Mittelachse der Buchse einnehmen kann. Der Abstand der Lagerstelle für die Gelenknocken 10 von den Buchsenöffnungen 5 bzw. 5' ist so gewählt, dass das freie Ende jeder Schutzklappe in der Öffnungsstellung gerade vor einer Buchsenöffnung liegt.

Der Stecker 4 mit seinem Steckerstift 3 kann grundsätzlich eine beliebige Bauweise haben. Im Ausführungsbeispiel besteht er aus einem im wesentlichen rechteckigen Steckergehäuse 22, das seitlich mit Führungsleisten 23 versehen ist. Diese Führungsleisten passen in die Führungsnuten 15 am Buchsenteil. An einer Sperrleiste 20 am oberen Teil des Steckergehäuses können die Sperrklinken 14 bzw. 14' einrasten. Ein am Stekkergehäuse angeordneter Entriegelungshebel 21 dient dazu, die Sperrklinke anzuheben und damit die Verriegelung wieder zu lösen. In das Steckergehäuse 22 ist eine Stifthalterung 24 eingeprellt, welche fest mit dem hier nicht näher dargestellten Lichtwellenleiter-Kabel bzw. mit dem Steckerstift 3 verbunden ist.

Figur 2 zeigt die Steckverbindung im zusammengebauten Zustand, wobei auf der rechten Seite ein Stecker 4 eingesteckt ist, während die linke Seite frei bleibt. Die beiden Enden 18 und 18' der Blattfeder 7 greifen frei beweglich an den Schutzklappen 6 und 6' an.

Ist kein Stecker in das Buchsenteil eingesteckt, so bleibt die Buchsenöffnung 5 in Einsteckrichtung a gesehen von der Schutzklappe 6 überlagert bzw. verdeckt. Ein aus dem eingesteckten Stecker 4 austretender Lichtstrahl wird somit durch die Schutzklappe 6 abgeblendet.

Wird nun ein Stecker 4 in das Buchsenteil eingeschoben, so läuft das Vorderteil des Steckerstifts 3 an der Schutzklappe auf und presst diese gegen die Kraft der Blattfeder in einer Schwenkbewegung nach unten, bis sie vollständig unterhalb der Ebene des Steckergehäuses 22 zurückgedrängt ist. Diese Position ist in Figur 2 auf der rechten Seite bzw. in Figur 4 sichtbar. Sobald der Stecker seine Endposition erreicht hat, rastet die Sperrklinke 14 hinter der Sperrleiste 20 ein. Zum Herausziehen des Steckers muss zuerst der Entriegelungshebel 21 betätigt werden. Die Schutzklappe wird sich jeweils unter der Vorspannkraft der Blattfeder soweit in Richtung Schliessstellung bewegen, wie es der Stecker erlaubt, bis die endgültige Schliessstellung erreicht ist.

Die dargestellte Lagerung der Buchse 2 ist insbesondere in Kombination mit der Blattfeder und mit den Schutzklappen besonders vorteilhaft. Diese Lagerung könnte aber auch unabhängig von den Schutzklappen Vorteile aufweisen. Mit Ausnahme der Buchse 2 und des Steckerstifts 2 sind alle übrigen Teile vorzugsweise aus einem Kunststoffmaterial gefertigt. Steckerstift und Buchse können aus Hartmetall, Keramik oder, wenn die Übertragungsdämpfung keine überragende Rolle spielt, ebenfalls aus Kunststoffmaterial gefertigt sein.

In Figur 5 ist eine Sequenz der Montage eines erfindungsgemässen Buchsenteils dargestellt. Auf der Unterseite des inneren Buchsengehäuses 8 ist die Öffnung 16 sichtbar, die sich praktisch über die gesamte Länge des Buchsengehäuses erstreckt. Die Breite der Öffnung entspricht etwa der Breite der beiden Schutzklappen 6, 6'. Die Gelenknocken 10 und die Anschlagnocken 11 der Schutzklappen werden über seitliche Nuten 27 eingeführt. Ebenfalls sichtbar sind hier die bereits eingeschobenen flanschartigen Randabschnitte 25, 25' der Buchsenhalterung. Diese Randabschnitte greifen in montiertem Zustand auf den mittleren Klammerabschnitt 19 der Blattfeder 7.

Die Enden 18, 18' der Blattfeder sind abgebogen und bewegen sich ohne feste Verbindung in Ausnehmungen 30 an den Schutzklappen. Nach dem Einsetzen der beiden Schutzklappen 6, 6' in das innere Buchsengehäuse 8 wird die Blattfeder 7 aufgelegt und anschliessend wird die ganze Einheit in das äussere Buchsengehäuse 9 geschoben. Dieser Vorgang lässt sich relativ leicht automatisieren.

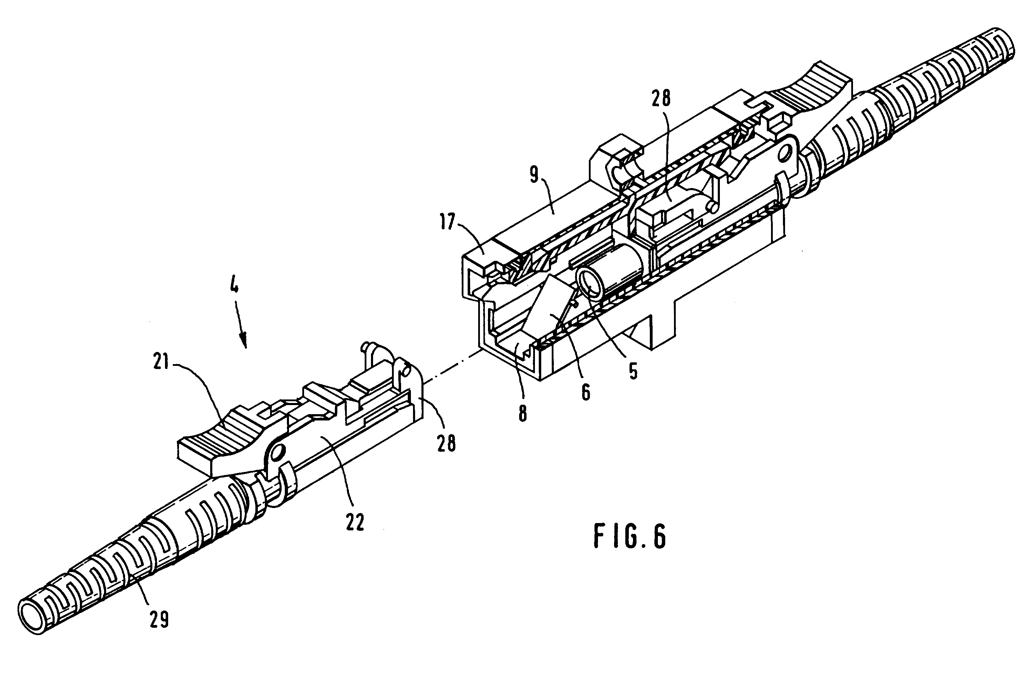

In Figur 6 ist eine Steckverbindung mit einem erfindungsgemässen Buchsenteil nochmals in Gesamtansicht dargestellt. Die beiden Stecker 4 sind hier an der Stirnseite ebenfalls mit einer Schutzklappe 28 versehen, welche beim Einstecken des Steckers in das Buchsenteil automatisch aufklappt. Mit 29 ist ein Knickschutz angedeutet, der die Übergangsstelle zwischen einem Lichtwellenleiterkabel und dem Stecker 4 schützt.

## Patentansprüche

1. Buchsenteil (1) für eine Lichtwellenleiter-Steckverbindung mit wenigstens einer Buchse (2) zur Aufnahme des Steckerstifts (3) eines in das Buchsenteil einsteckbaren Steckers, wobei die Buchse (2) eine Buchsenöffnung (5) aufweist, vor der in Einsteckrichtung (a) gesehen eine bewegliche Schutzklappe (6) angeordnet ist, welche in einer Schliessstellung die Buchsenöffnung wenigstens teilweise überlagert und welche zum Einstecken des Stekkerstifts in eine Öffnungsstellung bewegbar ist, dadurch gekennzeichnet, dass das Buchsenteil ein inneres Buchsengehäuse (8) aufweist, das in ein äusseres Buchsengehäuse (9) eingeschoben ist und dass benachbarte Gehäuseabschnitte des inneren und des äusseren Buchsengehäuses gemeinsam ein Lager bilden, in dem die Schutzklappe (6) an einer Seite gehalten und schwenkbar gelagert ist.

2. Buchsenteil nach Anspruch 1, dadurch gekennzeichnet, dass die Schutzklappe (6) mittels einer Blattfeder (7) in die Schliessstellung vorgespannt ist.

3. Buchsenteil nach Anspruch 1 oder 2, dadurch gekennzeichnet, dass die Schutzklappe (6) in der Schliessstellung in einem Winkel schräg zur Mittelachse der Buchse (2) gehalten ist und dass sie in Richtung gegen die Buchsenöffnung (5) in die Öffnungsstellung schwenkbar ist.

4. Buchsenteil nach einem der Ansprüche 1 bis 3, dadurch gekennzeichnet, dass die Schutzklappe (6) seitliche Gelenknocken (10) für die schwenkbare Lagerung in den Lagerstellen aufweist.

5. Buchsenteil nach Anspruch 4, dadurch gekennzeichnet, dass die Schutzklappe seitliche Anschlagnocken (11) für die Lagebegrenzung in der Schliessstellung aufweist.

6. Buchsenteil nach Anspruch 4 oder 5, dadurch gekennzeichnet, dass die Schutzklappe etwa rechteckig ausgebildet ist.

7. Buchsenteil nach einem der Ansprüche 1 bis 6, dadurch gekennzeichnet, dass das innere Buchsengehäuse (8) wenigstens eine Öffnung (16) in einer Gehäusewand aufweist, durch welche die Schutzklappe (6) für die Montage oder Demontage schiebbar ist, und dass diese Öffnung mit dem äusseren Buchsengehäuse (9) verschliessbar ist.

8. Buchsenteil nach einem der Ansprüche 1 bis 7, dadurch gekennzeichnet, dass das Buchsenteil eine Buchse (2) aufweist, in welche von beiden Seiten her ein Steckerstift einsteckbar ist und dass vor jeder Buchsenöffnung (5, 5') eine Schutzklappe (6, 6') angeordnet ist.

9. Buchsenteil nach Anspruch 8, dadurch gekennzeichnet, dass beide Schutzklappen (6, 6') durch eine gemeinsame Blattfeder (7) mit federnden Enden (18, 18') in die Schliessposition vorgespannt sind, welche unter der Buchse im Buchsenteil angeordnet ist.

10. Buchsenteil nach Anspruch 9, dadurch gekennzeichnet, dass die Buchse in einer Buchsenhalterung (12, 12') gelagert ist, welche in das Buchsenteil (1) einschiebbar ist und dass die Blattfeder (7) durch die Buchsenhalterung fixiert ist.

11. Buchsenteil nach Anspruch 10, dadurch gekennzeichnet, dass die Buchsenhalterung in zwei Teile (12, 12') unterteilt ist, die einander zugewandte, flanschartige Randabschnitte (25, 25') aufweisen und dass die Blattfeder (7) einen Mittelabschnitt (19) aufweist, in den die Randabschnitte eingreifen.

## Claims

1. A socket member (1) for an optical fibre plug connection comprising at least one socket (2) for receiving the plug pin (3) of a plug which can be inserted into the socket member, wherein the socket (2) has a socket opening (5) in front of which, as viewed in the insertion direction (a), is a movable protective flap (6) which in a closed position at least partially covers over the socket opening and which is movable into an open position for insertion of the plug pin, characterised in that the socket member has an inner socket housing (8) which is inserted into an outer socket housing (9) and that adjacent housing portions of the inner and outer socket housings jointly form a mounting in which the protective flap (6) is at one side held and pivotably mounted.

2. A socket member according to claim 1 characterised in that the protective flap (6) is biased into the closed position by means of a leaf spring (7).

3. A socket member according to claim 1 or claim 2 characterised in that the protective flap (6) is held in the closed position at an angle inclinedly relative to the centre line of the socket (2) and that it is pivotable into the open position in a direction towards the socket opening (5).

4. A socket member according to one of claims 1 to 3 characterised in that the protective flap (6) has lateral pivot projections (10) for pivotable mounting in the mounting locations.

5. A socket member according to claim 4 characterised in that the protective flap has lateral abutment projections (11) for positional limitation in the closed position.

6. A socket member according to claim 4 or claim 5 characterised in that the protective flap is of approximately rectangular configuration.

7. A socket member according to one of claims 1 to 6 characterised in that the inner socket housing (8) has at least one opening (16) in a housing wall through which the protective flap (6) can be pushed for mounting or dismantling, and that said opening is closable with the outer socket housing (9).

8. A socket member according to one of claims 1 to 7 characterised in that the socket member has a socket (2) into which a plug pin can be inserted from both sides and that a protective flap (6, 6') is arranged in front of each socket opening (5, 5').

9. A socket member according to claim 8 characterised in that both protective flaps (6, 6') are biased by a common leaf spring (7) with resilient ends (18, 18') into the closing position which is arranged under the socket in the socket member.

10. A socket member according to claim 9 characterised in that the socket is mounted in a socket holder (12, 12') which can be inserted into the socket member (1) and that the leaf spring (7) is fixed by the socket holder.

11. A socket member according to claim 10 characterised in that the socket holder is subdivided into two parts (12, 12') which have flange-like edge portions (25, 25') facing towards each other, and that the leaf spring (7) has a central portion (19) into which the edge portions engage.

## Revendications

1. Elément formant alvéole (1) pour un connecteur de fibres optiques, comportant au moins une alvéole (2) destinée à recevoir la broche (3) d'une fiche apte à être introduite dans l'élément formant alvéole, l'alvéole (2) ayant une ouverture (5) devant laquelle est disposé, si on considère le sens d'introduction (a), un clapet de protection mobile (6) qui couvre au moins partiellement l'ouverture d'alvéole, dans une position fermée, et qui est apte à être amené dans une position ouverte en vue de l'introduction de la broche, caractérisé en ce que l'élément formant alvéole comporte une enveloppe d'alvéole intérieure (8) que l'on glisse dans une enveloppe d'alvéole extérieure (9), et en ce que des sections d'enveloppe d'alvéole intérieure et extérieure voisines forment ensemble un support dans lequel le clapet de protection (6) est maintenu unilatéralement et monté pivotant.

2. Elément formant alvéole selon la revendication 1, caractérisé en ce que le clapet de protection (6) est précontraint dans la position fermée à l'aide d'un ressort à lame (7).

3. Elément formant alvéole selon la revendication 1 ou 2, caractérisé en ce que le clapet de protection (6) est maintenu dans la position fermée en étant incliné suivant un certain angle par rapport à l'axe médian de l'alvéole (2), et en ce qu'il est apte à pivoter vers la position ouverte en direction de l'ouverture d'alvéole (5).

4. Elément formant alvéole selon l'une des revendications 1 à 3, caractérisé en ce que le clapet de protection (6) comporte des saillies d'articulation latérales (10) pour le montage pivotant dans les points d'appui.

5. Elément formant alvéole selon la revendication 4, caractérisé en ce que le clapet de protection comporte des saillies de butée latérales (11) pour limiter sa position fermée.

6. Elément formant alvéole selon la revendication 4 ou 5, caractérisé en ce que le clapet de protection a une forme à peu près rectangulaire.

7. Elément formant alvéole selon l'une des revendications 1 à 6, caractérisé en ce que l'enveloppe d'alvéole intérieure (8) comporte au moins une ouverture (16) dans une paroi d'enveloppe, par laquelle on peut glisser le clapet de protection (6) pour le montage ou le démontage, et en ce que cette ouverture est apte à être fermée par l'enveloppe d'alvéole extérieure (9).

8. Elément formant alvéole selon l'une des revendications 1 à 7, caractérisé en ce qu'il comporte une alvéole (2) dans laquelle on peut introduire une broche par les deux côtés, et en ce qu'un clapet de protection (6, 6') est disposé devant chaque ouverture d'alvéole (5, 5').

9. Elément formant alvéole selon la revendication 8, caractérisé en ce que les deux clapets de protection (6, 6') sont précontraints dans la position fermée par un ressort à lame commun (7) à extrémités faisant ressort (18, 18'), qui est disposé sous l'alvéole, dans l'élément formant alvéole.

10. Elément formant alvéole selon la revendication 9, caractérisé en ce que l'alvéole est montée dans une fixation d'alvéole (12, 12') que l'on peut glisser dans l'élément formant alvéole (1), et en ce que le ressort à lame (7) est fixé à l'aide de la fixation d'alvéole.

11. Elément formant alvéole selon la revendication 10, caractérisé en ce que la fixation d'alvéole est divisée en deux parties (12, 12') qui comportent des sections d'extrémité en forme de brides (25, 25') tournées l'une vers l'autre, et en ce que le ressort à lame (7) comporte une section centrale (19) dans laquelle pénètrent les sections d'extrémité.
